# EUROPÄISCHE PATENTSCHRIFT

(11) **EP 1 924 615 B1**
(45) Veröffentlichungstag und Bekanntmachung des Hinweises auf die Patenterteilung: **28.07.2010**
(21) Anmeldenummer: 06791691.6
(22) Anmeldetag: 28.08.2006
(51) Int. Cl.: C08F 110/10, C08F 8/00, C08L 23/22

(54) **POLYISOBUTENPOLYOL UND FORMMASSE**
POLYISOBUTENE POLYOL AND MOULDING COMPOUND
POLYISOBUTENE POLYOL ET MATIERE A MOULER

(30) Priorität: 02.09.2005 DE 102005041788
(43) Veröffentlichungstag der Anmeldung: 28.05.2008
(73) Patentinhaber: BASF SE, 67056 Ludwigshafen (DE)
(72) Erfinder: RATH, Hans, Peter, 67269 Grünstadt (DE); LANGE, Arno, 67098 Bad Dürkheim (DE); MACH, Helmut, 69115 Heidelberg (DE); BLACKBOROW, Richard, F-67000 Strasbourg (FR)
(86) Internationale Anmeldenummer: PCT/EP2006/008406
(87) Internationale Veröffentlichungsnummer: WO 2007/025699

(56) Entgegenhaltungen:
- EP-A2- 0 737 662
- EP-B- 0 468 966
- WO-A2-02/48215
- DE-A1- 10 338 245
- US-A- 3 734 786
- US-A- 4 579 928

## Beschreibung

Die Erfindung betrifft ein Polyisobutenpolyol und eine Formmasse, die ein Vernetzungsprodukt des Polyisobutenpolyols enthält.

Polyisobutenkautschuke zeichnen sich durch besondere Eigenschaften aus, wie geringe Gas- und Feuchtigkeitsdurchlässigkeit, hohe Elastizität und Kälteflexibilität bis zu sehr tiefen Temperaturen. Polyisobutene besitzen eine ausgezeichnete Witterungs- und UV-Beständigkeit.

Die DE-A 10338245 beschreibt eine Formmasse aus einem Gemisch interpenetrierender Polymere mit einer ersten Phase eines vernetzten lsobutenpolymers und einer zweiten Phase eines versteifenden Polymers, das (Meth)acryl- und/oder Vinylaromateneinheiten umfasst, wobei die erste Phase das Reaktionsprodukt eines Isobutenpolymers und eines Vernetzungsmittels umfasst.

Die EP-A-0737662 offenbart Polyisobutene mit terminaler 1,3-Propandiolgruppe. Die Druckschrift zieht Polyisobutene mit mehr als einer 1,3-Propandiolgruppe pro Molekül nicht in Betracht.

Die bekannten Polyisobutenkautschuke weisen einen ausgeprägt sigmoidalen Verlauf des Speichermoduls (der ein Maß für die Elastizität ist) in Abhängigkeit von der Temperatur auf, mit hoher Elastizität bei tiefen Temperaturen und geringer Elastizität bei höheren Temperaturen. Dieses Verhalten beruht vermutlich darauf, dass die Hartsegmente des Kautschuks bei einer bestimmten Temperatur "schmelzen" und das elastische Verhalten des Netzwerks verloren geht.

Der Erfindung liegt die Aufgabe zugrunde, einen Polyisobutenkautschuk, der eine hohe Elastizität auch bei höheren Temperaturen bewahrt, sowie Isobutenpolymere, die sich zur Herstellung dieser Kautschuke eignen, bereitzustellen.

Die Aufgabe wird gelöst durch ein Isobutenpolymer, das pro Molekül durchschnittlich wenigstens 1,4 terminale 1,3-Propandiolgruppen, vorzugsweise durchschnittlich wenigstens 1,7 terminale 1,3-Propandiolgruppen, aufweist.

Bevorzugte Ausführungsformen des Isobutenpolymers betreffen lineare Polymere, die im Wesentlichen an beiden Molekülenden 1,3-Propandiolgruppen aufweisen, sowie sternförmige Polymere mit 3 oder 4 Ästen, die im Wesentlichen an allen Molekülenden 1,3-Propandiolgruppen aufweisen.

Das Isobutenpolymer weist vorzugsweise ein zahlenmittleres Molekulargewicht von 500 bis 50000, insbesondere 750 bis 10000, am meisten bevorzugt 900 bis 5000 auf. Erfindungsgemäße Isobutenpolymere sind durch Umsetzung eines Vorläuferpolymers mit terminalen Epoxidgruppen mit einem Boran und anschließende oxidative Spaltung des gebildeten Boratesters zu einem 2-Polyisobutenyl-1,3-propandiol erhältlich. Das Reaktionsschema ist nachstehend veranschaulicht, wobei nicht das vollständige Molekül, sondern lediglich ein Ausschnitt eines Molekülendes dargestellt ist.

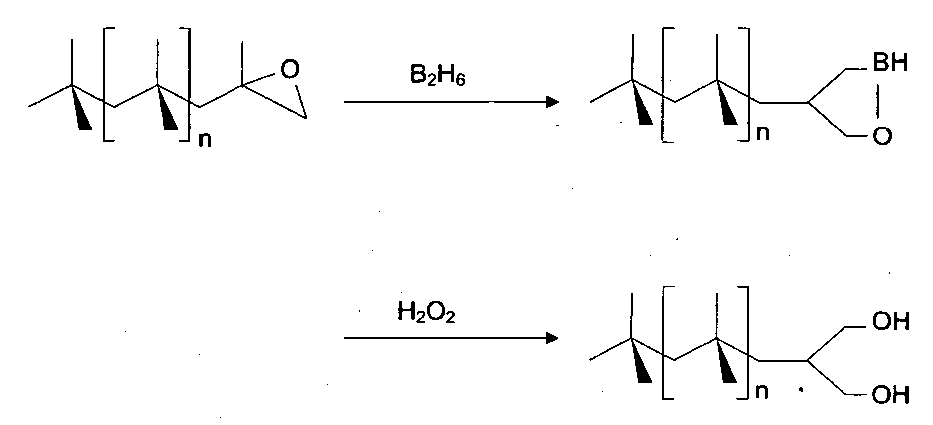

Das vorstehende Reaktionsschema veranschaulicht die Reaktion einer 1,2-Epoxygruppe unter Beteiligung einer zur Epoxygruppe benachbarten Methylgruppe. Die Reaktion ist auch ausgehend von einer 2,3-Epoxygruppe und/oder unter Beteiligung einer benachbarten Methylengruppe denkbar. Man erhält dabei ein Gemisch von sekundären und primären OH-Gruppen.

Geeignete Borane sind z.B. Diboran (B₂H₆) sowie Alkyl- und Arylborane RBH₂ (R = Alkyl oder Aryl). Dem Fachmann ist geläufig, dass derartige Borane auch in situ aus einem Borhydrid und einer Säure, meist BF₃-Etherat, hergestellt werden können. Die Umsetzung mit dem Boran erfolgt geeigneterweise in einem Boran-koordinierenden Lösungsmittel. Beispiele hierfür sind offenkettige Ether, wie Dialkyl-, Diaryl- oder Alkylarylether, sowie cyclische Ether, wie Tetrahydrofuran oder 1,4-Dioxan. Andere Lösungsmittel wie aromatische Kohlenwasserstoffe, z. B. Toluol, aliphatische Kohlenwasserstoffe, z. B. Cyclohexan, und halogenierte Kohlenwasserstoffe, z. B. Methylenchlorid oder n-Butylchlorid, sind ebenfalls geeignet.

Die oxidative Spaltung zum 1,3-Diol kann beispielsweise mittels Wasserstoffperoxid in Gegenwart einer Base unter Erwärmen auf z. B. 50 bis 75 °C erfolgen. Geeignete Lösungsmittel hierfür sind Ether oder Gemische von Ethern und Kohlenwasserstoffen.

Die Überführung des Epoxids in ein Polyisobutenderivat mit terminaler 1,3-Propandiolgruppe ist z.B. in der EP-A-0737662 beschrieben, worauf hiermit in vollem Umfang Bezug genommen wird.

Das Epoxid kann aus einem Isobutenpolymer mit terminalen olefinisch ungesättigten Gruppen durch Epoxidierung in üblicher Weise hergestellt werden, z. B. durch Umsetzung mit einer Persäure, wie m-Chlorperbenzoesäure oder Peressigsäure. Die Peressigsäure kann auch in situ aus Essigsäure und Wasserstoffperoxid in Gegenwart eines sauren Katalysators hergestellt werden. Geeignete Epoxidierungs-Verfahren sind in J. P. Kennedy et al., J. Polymer Science, Polymer Chemistry Ed., Vol. 20, 2809-2817 (1982), sowie der EP-A-0737662, WO 92/14806 und US 6,303,703 beschrieben, worauf hiermit in vollem Umfang Bezug genommen wird.

In einem bevorzugten Verfahren zur Epoxidierung setzt man das Isobutenpolymer mit wässriger Wasserstoffperoxidlösung in Gegenwart wenigstens einer Carbonsäure in einem Kohlenwasserstoff-Schleppmittel unter azeotroper Entfernung von Wasser um. Man führt die Umsetzung im Allgemeinen bei einer Temperatur im Bereich von 45 bis 90 °C durch, vorzugsweise 50 bis 75 °C. Um bei Verwendung eines höhersiedenden Schleppmittels in dem angegebenen Temperaturbereich arbeiten und/oder die Reaktionswärme zumindest teilweise durch Siedekühlung abführen zu können, kann es erforderlich sein, die Umsetzung bei vermindertem Druck durchzuführen. Geeignet ist z. B. das Arbeiten bei einem Druck im Bereich von 100 bis 500 mbar. Geeignete Kohlenwasserstoff-Schleppmittel sind aliphatische Kohlenwasserstoffe wie Hexan, Heptan; alicyclische Kohlenwasserstoffe wie Cyclohexan, Methylcyclohexan, Ethylcyclohexan; und aromatische Kohlenwasserstoffe, wie Benzol, Toluol oder Xylol. Toluol und Cyclohexan sind am meisten bevorzugt. Die Carbonsäure ist vorzugsweise Ameisensäure oder eine Kombination von Ameisensäure und einer unter Essig- und Propionsäure ausgewählten Säure. Das epoxidierende Agens ist eine Persäure, die sich in situ aus der Carbonsäure und dem Wasserstoffperoxid bildet. Die Entfernung von Wasser verschiebt das Reaktionsgleichgewicht auf die Seite der Persäure. Außerdem wird das Verteilungsgleichgewicht der Persäure zwischen der wässrigen und der organischen Phase durch den Entzug von Wasser beeinflusst und die Persäure wird in die organische Phase getrieben.

Die Isobutenpolymere, die als Ausgangsmaterial für die Epoxidierung in Betracht kommen, umfassen im Allgemeinen wenigstens 50 Gew.-% Isobuteneinheiten, vorzugsweise wenigstens 80 Gew.-% Isobuteneinheiten, insbesondere wenigstens 95 Gew.-% Isobuteneinheiten. Neben Isobüteneinheiten kann das Isobutenpolymer auch Einheiten von olefinisch ungesättigten Monomeren, welche mit Isobuten unter kationischen Polymerisationsbedingungen copolymerisierbar sind, enthalten. Die Comonomere können statistisch im Polymer verteilt oder als Blöcke angeordnet sein Als copolymerisierbare Monomere kommen vor allem Vinylaromaten wie Styrol, C₁-C₄-Alkylstyrole wie α-Methylstyrol, 3- und 4-Methylstyrol, oder 4-tert-Butylstyrol, sowie Isoolefine mit 5 bis 10 C-Atomen wie 2-Methylbuten-1, 2-Methylpenten-1, 2-Methylhexen-1, 2-Ethylpenten-1, 2-Ethylhexen-1 und 2-Propylhepten-1 in Betracht.

Bei der olefinisch ungesättigten Gruppe kann es sich z. B. um aliphatische ungesättigte Gruppen mit 2 bis 6 Kohlenstoffatomen wie Vinyl, Allyl, Methylvinyl, Methallyl, Propenyl, 2-Methylpropenyl, Butenyl, Pentenyl, Hexenyl; oder cylische ungesättigte Kohlenwasserstoffreste wie Cyclopropenyl, Cyclobutenyl, Cyclopentenyl und Cylohexenyl, handeln. Bevorzugt sind Isobutenpolymere mit terminalen Allyl-, Methallyl-, 2-Methylpropenyl- oder Cyclopentenylgruppen.

Es handelt sich um lineare Moleküle, die im Wesentlichen an beiden Molekülenden olefinische Doppelbindungen aufweisen, oder sternförmige Polymere, die an den Molekülenden olefinische Doppelbindungen aufweisen.

Derartige Isobutenpolymere können nach Verfahren hergestellt werden, die in den US 4,946,889, US 4,327,201; US 5,169,914, EP-A-206 756, EP-A-265 053 sowie umfassend in J.P. Kennedy, B. Ivan, "Designed Polymers by Carbocationic Macromolecular Engineering", Oxford University Press, New York, 1991. beschrieben sind. Die Isobutenpolymere werden durch lebende kationische Polymerisation von Isobuten hergestellt. Das eingesetzte Initiatorsystem umfasst in der Regel eine Lewis-Säure und einen "Initiator", d. h. eine organische Verbindung mit einer leicht substituierbaren Abgangsgruppe, die mit der Lewis-Säure ein Carbokation oder einen kationogenen Komplex bildet. Der Initiator ist in der Regel ein tertiäres Halogenid, ein tertiärer Ester oder Ether oder eine Verbindung mit allyl-ständigem Halogenatom, allyl-ständiger Alkoxy- oder Acyloxygruppe. Das Carbokation oder der kationogene Komplex addieren oder insertieren sukzessive Isobutenmoleküle an das kationische Zentrum, wodurch sich eine wachsende Polymerkette ausbildet, deren Ende meist durch die Abgangsgruppe des Initiators terminiert ist. Der Initiator kann mono- oder höherfunktionell sein, wobei im letzteren Fall Polymerketten in mehr als eine Richtung wachsen.

Isobutenpolymere mit terminaler Doppelbindung können auf verschiedene Weise erhalten werden. Man kann von olefinisch ungesättigten Inifermolekülen ausgehen. Um Polyisobutenmoleküle mit mehr als einer terminalen Doppelbindung pro Molekül zu erhalten, kann man am distalen Kettenende ebenfalls eine olefinische Doppelbindung einführen oder zwei oder mehr lebende Polymerketten koppeln. Beide Möglichkeiten sind nachstehend näher erläutert.

Alternativ geht man von Initiatormolekülen ohne olefinische Doppelbindung aus und terminiert die distalen Kettenenden unter Ausbildung einer ethylenisch ungesättigten Gruppe, wobei man z. B. die reaktiven Kettenenden mit einem Terminierungsreagenz umsetzt, das an die Kettenenden eine ethylenisch ungesättigte Gruppe anfügt, oder geeignet behandelt, um die reaktiven Kettenende in solche Gruppen umzuwandeln.

Bevorzugt sind solche Initiatoren, worin die funktionelle Gruppe die allgemeine Formel FG 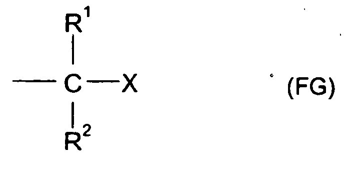 aufweist, worin
- X: ausgewählt ist unter Halogen, C₁-C₆-Alkoxy und C₁-C₆-Acyloxy,
- R¹: Wasserstoff oder Methyl bedeutet und
- R²: für Methyl steht, oder mit R¹ oder dem Molekülteil an den die funktionelle Gruppe FG gebunden ist, einen C₅-C₆-Cycloalkylring bildet, R² auch Wasserstoff bedeu- ten kann, wenn die funktionelle Gruppe FG an ein aromatisches oder olefinisch ungesättigtes C-Atom gebunden ist.

Die Initiatoren weisen vorzugsweise zwei, drei oder vier, insbesondere eine oder zwei, und besonders bevorzugt zwei funktionelle Gruppen FG auf. Bevorzugt steht X in Formel (FG) für ein Halogenatom, insbesondere für Chlor.

Bevorzugte Initiatoren gehorchen beispielsweise den allgemeinen Formeln I-A bis I-F: 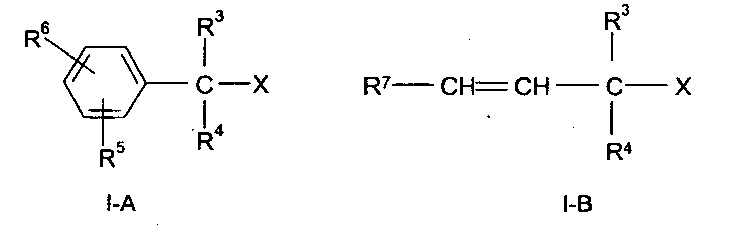 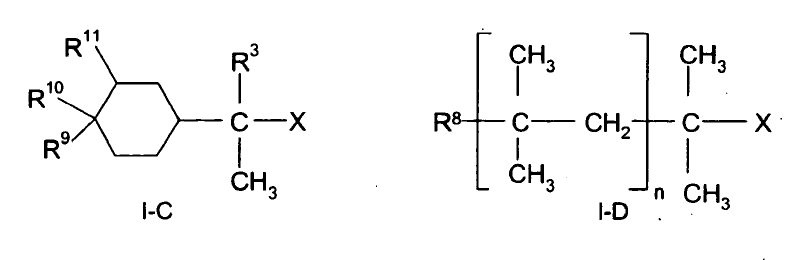 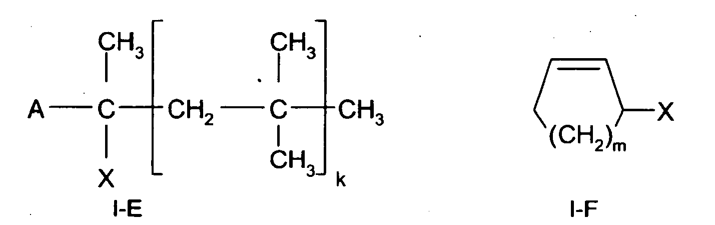 worin X die zuvor genannte Bedeutung hat;
- n und k: unabhängig voneinander für 0, 1, 2, 3, 4 oder 5 stehen;
- m.: für 1, 2 oder 3 steht;
- R³, R⁴ und R¹⁰: unabhängig voneinander für Wasserstoff oder Methyl stehen;
- R⁵, R⁶ und R⁷: unabhängig voneinander für Wasserstoff, C₁-C₄-Alkyl oder eine Gruppe CR³R⁴-X, stehen, worin R³, R⁴ und X die zuvor genannten Bedeutungen haben; und
- R⁸: für Wasserstoff, Methyl oder ein Gruppe X steht; und
- R⁹ und R¹¹: Wasserstoff oder eine Gruppe X bedeuten; und
- A: für einen ethylenisch ungesättigten Kohlenwasserstoffrest steht, der eine Vinyl- gruppe oder eine Cycloalkenylgruppe aufweist.

In den Formeln I-A bis I-C stehen R³ und R⁴ vorzugsweise beide für Methyl. In der Formel I-A steht R⁶ beispielsweise für eine Gruppe CR³R⁴-X, die in para- oder meta-Position zur CR³R⁴X-Gruppe angeordnet ist, insbesondere wenn R⁵ Wasserstoff bedeutet. Sie kann sich auch in der meta-Position befinden, wenn die Gruppe R⁵ für C₁-C₄-Alkyl oder eine Gruppe CR³R⁴-X steht. Bevorzugte Verbindungen I-A sind z. B.: 2-Chlor-2-phenylpropan sowie 1,4-Bis(2-chlor-2-propyl)benzol (1,4-Dicumylchlorid, 1,4-DCC) oder 1,3-Bis(2-chlor-2-propyl)benzol (1,3-Dicumylchlorid, 1,3-DCC).

Beispiele für Verbindungen der Formel I-B sind Allylchlorid, Methallylchlorid, 2-Chlor-2-methylbuten-2 sowie 2,5-Dichlor-2,5-dimethylhexen-3.

In den Verbindungen I-C steht R³ vorzugsweise für Methyl. R⁹ steht vorzugsweise für eine Gruppe X, und insbesondere für Halogen, insbesondere, wenn R¹⁰ für Methyl steht. Beispiele für Verbindungen der allgemeinen Formel I-C sind 1,8-Dichlor-4-p-menthan (Limonendihydrochlorid), 1,8-Dibrom-4-p-menthan (Limonendihydrobromid), 1-(1-Chlorethyl-3-chlorcyclohexan, 1-(1-Chlorethyl-4-chlorcyclohexan, 1-(1-Bromethyl)-3-bromcyclohexan und 1-(1-Bromethyl)-4-bromcyclohexan.

Unter den Verbindungen der Formel I-D sind solche bevorzugt, in denen R⁸ für eine Methylgruppe steht. Bevorzugt sind außerdem Verbindungen der allgemeinen Formel I-D, in denen R⁸ für eine Gruppe X, und insbesondere ein Halogen-Atom, steht, wenn n > 0 ist.

In Verbindungen I-E steht A für einen Kohlenwasserstoffrest mit in der Regel 2 bis 21 C-Atomen, der entweder eine Vinylgruppe (CH₂=CH-) oder einen C₅-C₈-Cycloalkenylrest, z. B. Cyclopenten-3-yl, Cyclopenten-4-yl, Cyclohexen-3-yl, Cyclohexen-4-yl, Cyclohepten-3-yl, Cyclohepten-4-yl, Cycloocten-3-yl, Cycloocten-4-yl oder Cycloocten-5-yl, aufweist.

Vorzugsweise steht A für einen Rest der Formeln A.1, A.2 oder A.3 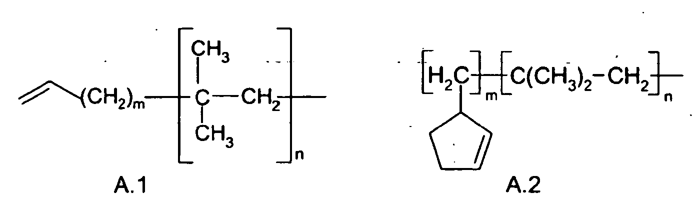 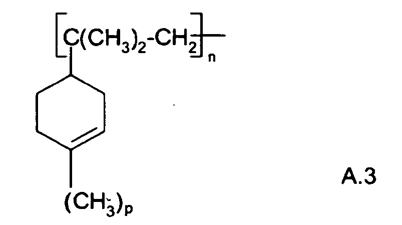 worin
- m: für 0 oder 1 steht;
- n: für eine Zahl von 0 bis 3, insbesondere 0, 1 oder 2 steht, und
- p: für 0 oder 1 steht.

In Verbindungen I mit A = A.2 steht m vorzugsweise für 1.

In Verbindungen I mit A = A.3 steht n vorzugsweise für 0. p steht vorzugsweise für 1.

Beispiele für Initiator-Verbindungen I sind: 2-Chlor-2-methylbuten-3, 2-Chlor-2-methylpenten-4, 2-Chlor-2,4,4-trimethylhexen-5, 2-Chlor-2-methyl-3-(cyclopenten-3-yl)propan, 2-Chlor-2-methyl-4-(cyclohexen-4-yl)pentan und 2-Chlor-2-(1-methylcyclohexen-4-yl)propen.

In Verbindungen der Formel I-F steht X vorzugsweise für Chlor. m steht vorzugsweise für 1 oder 2 und besonders bevorzugt für 1. Eine bevorzugte Verbindung der Formel I-F ist 3-Chlorcyclopenten.

Besonders bevorzugt verwendet man als Initiatoren Verbindungen der Formel I-A und insbesondere 1,4-Bis(2-chlor-2-propyl)benzol (1,4-Dicumylchlorid, 1,4-DCC) oder 1,3-Bis(2-chlor-2-propyl)benzol (1,3-Dicumylchlorid, 1,3-DCC), wobei 1,4-Dicumylchlorid besonders bevorzugt ist.

Die oben beschriebenen Initiatoren sowie Verfahren zu ihrer Herstellung sind bekannt und beispielsweise in der WO 02/48215, WO 03/074577 sowie in der deutschen Patentanmeldung 10328854 beschrieben.

Als Lewis-Säure kommen kovalente Metallhalogenide und Halbmetallhalogenide, die eine Elektronenpaarlücke aufweisen, in Betracht. Derartige Verbindungen sind dem Fachmann bekannt, beispielsweise aus J.P. Kennedy et al. in US 4,946,889, US 4,327,201, US 5,169,914, EP-A-206 756, EP-A-265 053 sowie umfassend in J.P. Kennedy, B. Ivan, "Designed Polymers by Carbocationic Macromolecular Engineering", Oxford University Press, New York, 1991. Sie sind in der Regel ausgewählt unter Halogen-Verbindungen des Titans, des Zinns, des Aluminiums, des Vanadiums oder des Eisens, sowie den Halogeniden des Bors. Bevorzugt sind die Chloride, und im Falle des Aluminiums auch die Monoalkylaluminiumdichloride und die Dialkylaluminiumchloride. Bevorzugte Lewis-Säuren sind Titantetrachlorid, Bortrichlorid, Bortrifluorid, Zinntetrachlorid, Aluminiumtrichlorid, Vanadiumpentachlorid, Eisentrichlorid, Alkylaluminiumdichloride und Dialkylaluminiumchloride. Besonders bevorzugte Lewis-Säuren sind Titantetrachlorid, Bortrichlorid und Ethylaluminiumdichlorid und insbesondere Titantetrachlorid. Alternativ kann auch ein Gemisch aus wenigstens zwei Lewis-Säuren eingesetzt werden, beispielsweise Bortrichlorid im Gemisch mit Titantetrachlorid.

Es hat sich bewährt, die Polymerisation in Gegenwart eines Elektronendonors durchzuführen. Als Donoren sind Pyridin und sterisch gehinderte Pyridin-Derivate sowie insbesondere siliziumorganische Verbindungen bevorzugt.

Die Polymerisation wird üblicherweise in einem Lösungsmittel oder Lösungsmittelgemisch durchgeführt, wie aliphatischen Kohlenwasserstoffen, aromatischen Kohlenwasserstoffen sowie halogenierten Kohlenwasserstoffen. Besonders bewährt haben sich Toluol oder 1-Chlorbutan und Gemische aliphatischer, cycloaliphatischer oder aromatischer Kohlenwasserstoffe mit halogenierten Kohlenwasserstoffen, wie Dichlormethan/n-Hexan, Dichlormethan/Methylcyclohexan, Dichlormethan/Toluol, Chlormethan/n-Hexan, 1-Chlorbutan/n-Hexan, 1-Chlorbutan/Toluol und dergleichen. Überschüssiges Isobuten kann im Gemisch mit halogenierten Kohlenwasserstoffen ebenfalls als Lösungsmittel dienen. In Betracht kommen z.B. Dichlormethan/Isobuten, Chlormethan/Isobuten, 1-Chlorbutan/Isobuten.

Um am distalen Kettenende eine olefinische Doppelbindung einzuführen, setzt man das reaktive Kettenende mit einem Terminierungsreagenz um, das an das Kettenende eine olefinisch ungesättigte Gruppe anfügt, oder behandelt das reaktive Kettenende geeignet, um es in eine solche Gruppe umzuwandeln.

In der einfachsten Ausführungsform wird das Kettenende einer Dehydrohalogenierungsreaktion unterworfen, z. B. durch thermische Behandlung, beispielsweise durch Erwärmen auf eine Temperatur von 70 bis 200 °C, oder durch Behandlung mit einer Base. Geeignete Basen sind z. B. Alkalimetallalkoxide, wie Natriummethanolat, Natriumethanolat und Kalium-tert-Butanolat, basisches Aluminiumoxid, Alkalimetallhydroxide, wie Natriumhydroxid, und tertiäre Amine, wie Pyridin oder Tributylamin, vgl. Kennedy et al., Polymer Bulletin 1985, 13, 435-439. Bevorzugt wird Natriumethanolat verwendet.

Alternativ wird das Kettenende durch Zugabe einer Trialkylallylsilanverbindung, z. B. Trimethylallylsilan, terminiert. Die Verwendung der Allylsilane führt zum Abbruch der Polymerisation unter Einführung eines Allylrestes am Polymerkettenende, vgl. EP 264 214.

In einer weiteren Ausführungsform wird das reaktive Kettenende mit einem konjugierten Dien, wie Butadien (vgl. DE-A 40 25 961) oder einem nicht konjugierten Dien wie 1,9-Decadien oder einem Alkenyloxystyrol wie p-Hexenyloxystyrol (vgl. JP-A-4-288309) umgesetzt.

In einer weiteren Ausführungsform werden durch Zusatz eines Kopplungsmittels zwei oder mehrere lebende Polymerketten gekoppelt. "Kopplung" bedeutet die Ausbildung von chemischen Bindungen zwischen den reaktiven Kettenenden, so dass zwei oder mehrere Polymerketten zu einem Molekül verbunden werden. Die durch Kopplung erhaltenen Moleküle sind symmetrische telechele oder sternförmige Moleküle mit Gruppen des Initiators, z. B. Cyclopentenylgruppen, an den Molekülenden bzw. den Enden der Äste des sternförmigen Moleküls.

Geeignete Kopplungsmittel weisen beispielsweise wenigstens zwei allylständig zur gleichen oder verschiedenen Doppelbindungen angeordnete elektrofuge Abgangsgruppen, z. B. Trialkylsilylgruppen, auf, so dass sich das kationische Zentrum eines reaktiven Kettenendes in einer konzertierten Reaktion unter Abspaltung der Austrittsgruppe und Verschiebung der Doppelbindung anlagern kann. Andere Kopplungsmittel weisen wenigstens ein konjugiertes System auf, an das sich das kationische Zentrum eines reaktiven Kettenendes unter Ausbildung eines stabilisierten Kations elektrophil addieren kann. Durch Abspaltung einer Austrittsgruppe, z. B. eines Protons, entsteht dann unter Rückbildung des konjugierten Systems eine stabile σ-Bindung zu der Polymerkette. Mehrere dieser konjugierten Systeme können durch inerte Spacer miteinander verbunden sein.

Zu den geeigneten Kopplungsmitteln zählen:
(i) Verbindungen, die wenigstens zwei 5-gliedrige Heterocyclen mit einem unter Sauerstoff, Schwefel und Stickstoff ausgewählten Heteroatom aufweisen, z. B. organische Verbindungen, die wenigstens zwei Furanringe aufweisen, wie 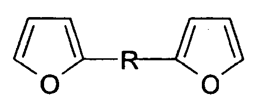 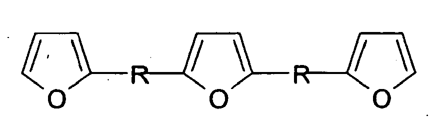 worin R für C₁-C₁₀-Alkylen steht, vorzugsweise Methylen oder 2,2-Propandiyl;
(ii) Verbindungen mit wenigstens zwei allylständigen Trialkylsilylgruppen, wie 1,1-Bis(trialkylsilylmethyl)ethylene, z. B. 1,1-Bis(trimethylsilylmethyl)ethylen,
   Bis[(trialkylsilyl)-propenyl]benzole z. B. 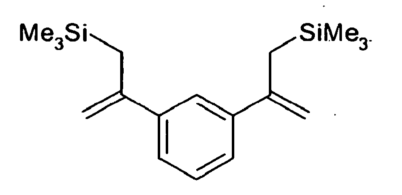 (worin Me für Methyl steht),
(iii) Verbindungen mit wenigstens zwei konjugiert zu jeweils zwei aromatischen Ringen angeordneten Vinylidengruppen, wie Bis-diphenylethylen z. B.

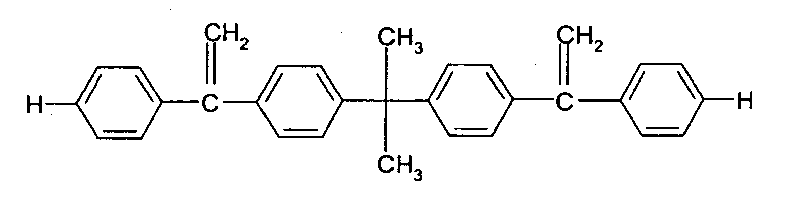

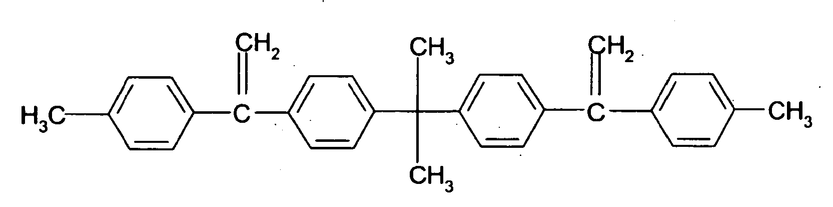

Eine Beschreibung geeigneter Kopplungsmittel findet sich in folgenden Literaturstellen; die Kopplungsreaktion kann in analoger Weise zu den dort beschriebenen Umsetzungen durchgeführt werden: R. Faust, S. Hadjikyriacou, Macromolecules 2000, 33, 730-733; R. Faust, S. Hadjikyriacou, Macromolecules 1999, 32, 6393-6399; R. Faust, S. Hadjikyriacou, Polym. Bull. 1999, 43, 121-128; R. Faust, Y. Bae, Macromolecules 1997, 30, 198; R. Faust, Y. Bae, Macromolecules 1998, 31, 2480; R. Storey, Maggio, Polymer Preprints 1998, 39, 327-328; WO99/24480; US 5,690,861 und US 5,981,785.

Die Kopplung erfolgt in der Regel in Gegenwart einer Lewis-Säure, wobei sich solche Lewis-Säuren eignen, die auch zur Durchführung der eigentlichen Polymerisationsreaktion verwendbar sind. Zur Durchführung der Kopplungsreaktion sind außerdem auch die gleichen Lösungsmittel und Temperaturen geeignet, wie man sie zur Durchführung der eigentlichen Polymerisationsreaktion einsetzt. Zweckmäßigerweise kann man die Kopplung daher als Eintopfreaktion im Anschluss an die Polymerisationsreaktion im gleichen Lösungsmittel in Gegenwart der zur Polymerisation eingesetzten Lewis-Säure durchführen.

Die Erfindung betrifft auch eine Formmasse, die das Umsetzungsprodukt des oben definierten Isobutenpolymers mit einem Vernetzungsmittel, das wenigstens 2, vorzugsweise wenigstens 3, gegenüber Hydroxylgruppen reaktive funktionelle Gruppen pro Molekül des Vernetzungsmittels umfasst.

Die Vernetzungsreaktion erfolgt vorzugsweise in einem Lösungsmittel. Hierzu sind gesättigte oder ungesättigte aliphatische Kohlenwasserstoffe wie Hexan, Pentan, Isopentan, Cyclohexan, Methylcyclohexan, Diisobuten, Triisobuten, Tetraisobuten, Pentaisobuten, Hexaisobuten oder Gemische davon, aromatische Kohlenwasserstoffe wie Benzol, Toluol, Xylol, oder Gemische davon geeignet.

Die gegenüber Hydroxylgruppen reaktiven funktionellen Gruppen sind z. B. unter Epoxy- und Isocyanatgruppen ausgewählt.

Bei dem Vernetzungsmittel handelt es sich z. B. um ein di- oder höherfunktionelles Isocyanat, das vorzugsweise unter Diisocyanaten, den Biurethen und Cyanuraten von Diisocyanaten sowie den Addukten von Diisocyanaten an Polyole ausgewählt ist. Geeignete Diisocyanate weisen in der Regel 4 bis 22 C-Atome auf. Die Diisocyanate sind üblicherweise ausgewählt unter aliphatischen, cyclo-aliphatischen und aromatischen Diisocyanaten, z. B. 1,4-Diisocyanatobutan, 1,6-Diisocyanatohexan, 1,6-Diisocyanato-2,2,4-trimethylhexan, 1,6-Diisocyanato-2,4,4-trimethylhexan, 1,2-, 1,3- und 1,4-Diisocyanatocyclohexan, 2,4- und 2,6-Diisocyanato-1-methylcyclohexan, 4,4'-Bis(isocyanatocyclohexyl)methan, Isophorondiisocyanat (= 1-Isocyanato-3,3,5-trimethyl-5-isocyanatomethylcyclohexan), 2,4- und 2,6-Toluylendiisocyanat, Tetramethylen-p-xylylendiisocyanat (= 1,4-Bis(2-isocyanatoprop-2-yl)benzol), 4,4'-Diisocyanatodiphenylmethan, vorzugsweise 1,6-Diisocyanatohexan und Isophorondiisocyanat, und Mischungen davon. Bevorzugte Verbindungen umfassen die Cyanurate und Biurete aliphatischer Diisocyanate, insbesondere die Cyanurate. Besonders bevorzugte Verbindungen sind das Isocyanurat und das Biuret des Isophorondiisocyanats und das Isocyanurat und das Biuret des 1,6-Diisocyanatohexans. Beispiele für Addukte von Diisocyanaten an Polyole sind die Addukte der oben genannten Diisocyanate an Glycerin, Trimethylolethan und Trimethylolpropan, z. B. das Addukt von Toluylendiisocyanaten an Trimethylolpropan, oder die Addukte von 1,6-Diisocyanatohexan oder Isophorondiisocyanat an Trimethylpropan und/oder Glycerin.

Zur Beschleunigung der Umsetzung zwischen den Isocyanat-reaktiven Gruppen des Isobutenpolymers und den Isocyanatgruppen des Vernetzungsmittels können bekannte Katalysatoren, wie z. B. Dibutylzinndilaurat, Zinn-(II)-octoat, 1,4-Diazabicyclo[2.2.2]-octan oder Amine, wie Triethylamin, eingesetzt werden. Diese werden typischerweise in einer Menge von 10⁻⁵ bis 10⁻² g, bezogen auf des Gewicht des Vernetzungsmittels, eingesetzt.

Die Vernetzungsdichte kann durch Variation der Funktionalität des Polyisocyanats, des molaren Verhältnisses des Polyisocyanats zum Hydroxyl-terminierten Isobutenpolymer, oder durch Mitverwendung monofunktioneller, gegenüber Isocyanatgruppen reaktiver Verbindungen, wie einwertiger Alkohole, z. B. Ethylhexanol oder Propylheptanol, gesteuert werden.

Das Vernetzungsmittel wird in der Regel in einer Menge eingesetzt, die einem NCO:OH-Equivalentverhältnis von 0,5 bis 2, bevorzugt 0,75 bis 1,5 und ganz besonders bevorzugt 0,8 bis 1,2, entspricht.

Weiterhin eignen sich als Vernetzungsmittel auch Epoxyverbindungen mit wenigstens zwei Epoxidgruppen im Molekül sowie deren durch Vorverlängerung entstandene Verlängerungsprodukte (Präpolymere für Epoxyharze, wie sie z. B. in Ullmann's Encyclopedia of Industrial Chemistry, 6th Edition, 2000, Electronic Release, im Kapitel "Epoxy Resins" beschrieben sind).

Zu Epoxyverbindungen mit wenigstens zwei Epoxidgruppen im Molekül zählen vor allem:
(i) Polyglycidyl- und Poly(β-methylglycidyl)ester, die erhältlich sind durch Umsetzung einer Verbindung mit wenigstens zwei Carboxylgruppen, wie einer aliphatischen oder aromatischen Polycarbonsäure, mit Epichlorhydrin oder β-Methylepichlorhydrin. Die Umsetzung erfolgt vorzugsweise in Gegenwart einer Base. Geeignete aliphatische Polycarbonsäuren sind Oxalsäure, Bernsteinsäure, Glutarsäure, Adipinsäure, Pimelinsäure, Azelainsäure, dimerisierte oder trimerisierte Linolensäure, Tetrahydrophthalsäure, Hexahydrophthalsäure oder 4-Methylhexahydrophthalsäure. Geeignete aromatische Polycarbonsäuren sind z. B. Phthalsäure, Isophthalsäure oder Terephthalsäure.
(ii) Polyglycidyl- oder Poly(b-methylglycidyl)ether, die sich z. B. von acyclischen Alkoholen, wie Ethylenglykol, Diethylenglykol, Poly(oxyethylen)glykolen, Propan-1,2-diol, Poly(oxypropylen)glykole, Propan-1,3-diol, Butan-1,4-diol, Poly(oxytetramethylen)glykole, Pentan-1,5-diol, Hexan-1,6-diol, Hexan-2,4,6-triol, Glycerin, 1,1,1-Trimethylolpropan, Pentaerythritol, Sorbitol; oder cyclischen Alkoholen wie 1,4-Cyclohexandimethanol, Bis(4-hydroxycyclohexyl)methan oder 2,2-Bis(4-hydroxycyclohexyl)-propan ableiten; oder aromatische Kerne umfassen wie N,N-Bis(2-hydroxyethyl)anilin oder p,p-Bis(2-hydroxyethylamino)diphenylmethan.
   Die Glycidylether können sich auch von einkernigen Phenolen wie Resorcin oder Hydrochinon, oder mehrkernigen Phenolen, wie Bis(4-hydroxyphenyl)methan, 4,4'-Dihydroxybiphenyl Bis(4-hydroxyphenyl)sulfon, 1,1,2,2-Tetrakis(4-hydroxyphenyl)-ethan, 2,2-Bis(4-hydroxyphenyl)propan, 2,2-Bis(3,5-dibrom-4-hydroxyphenyl)propan oder von Novolaken, die erhältlich sind durch Kondensation von Aldehyden wie Formaldehyd, Acetaldehyd, Chloral oder Furfural, mit Phenolen, wie Phenol, 4-Chlorphenol, 2-Methylphenol, 4-tert-Butylphenol, oder Bisphenolen.
(iii) Poly(N-glycidyl)-Verbindungen, die durch Dehydrochlorierung der Reaktionsprodukte von Epichlorhydrin mit Aminen erhältlich sind, die wenigstens zwei Amin-Wasserstoffatome aufweisen, wie Anilin, n-Butylamin, Bis(4-aminophenyl)methan, m-Xylylendiamin, oder Bis(4-methylaminophenyl)methan. Zu den Poly(N-glycidyl)-Verbindungen zählen auch Triglycidylisocyanurate, N,N'-Diglycidylderivate von Alkylenharnstoffen, wie Ethylenharnstoff oder 1,3-Propylenharnstoff and die Diglycidylderivate von Hydantoinen, wie 5,5-Dimethylhydantoin.
(iv) Poly(S-glycidyl)-Verbindungen wie Di-S-glycidylderivate, die sich von Dithiolen ableiten, wie Ethan-1,2-dithiol oder Bis(4-mercaptomethylphenyl)ether.
(v) Cycloaliphatische Epoxy-Verbindungen, wie Bis(2,3-epoxycyclopentyl)ether, 2,3-Epoxycyclopentylglycidylether, 1,2-Bis(2,3-epoxycyclopentyloxy)ethan oder 3,4-Epoxycyclohexylmethyl-3',4'-epoxycyclohexancarboxylat; oder gemischte cycloaliphatische-aliphatische Epoxy-Verbindungen wie Limonendiepoxid.

Die erfindungsgemäße Formmasse kann außerdem ein versteifendes Polymer umfassen, das (Meth)acryl- und/oder Vinylaromateneinheiten umfasst. Das versteifende ist durch radikalische Polymerisation von (Meth)acrylmonomeren oder vinylaromatischen Monomere erhältlich. Beispiele geeigneter Monomere sind Styrol, kernalkylierte Styrole mit bevorzugt C₁-C₄-Alkylresten wie α-Methylstyrol, p-Methylstyrol, Acrylnitril, Methacrylnitril, Acrylamid bzw. Methacrylamid, Alkylacrylate und -methacrylate mit 1 bis 4 C-Atomen im Alkylrest wie insbesondere Methylmethacrylat. Verwendet werden vorzugsweise Monomere und Monomerengemische, die ein Polymer bzw. Copolymer mit einer Glasübergangstemperatur von mehr als +20 °C und bevorzugt mehr als +50 °C ergeben.

Das versteifende Polymer kann daneben von (Meth)acrylmonomeren oder vinylaromatischen Monomeren verschiedene Monomere enthalten. Die (Meth)acrylmonomere oder vinylaromatischen Monomere machen im Allgemeinen wenigstens 20 Gew.-%, vorzugsweise wenigstens 50 Gew.-%, insbesondere wenigstens 70 Gew.-%, der konstituierenden Monomere aus.

Zur Herstellung einer Formasse werden die das versteifende Polymer konstituierenden Monomere radikalisch polymerisiert, entweder in Gegenwart eines zuvor hergestellten Netzwerks aus einem vernetzten Isobutenpolymer oder unter gleichzeitiger Vernetzung des Isobutenpolymers.

Die Polymerisation wird mittels eines radikalbildenden Initiators oder, alternativ, durch energiereiche Strahlung wie UV-Strahlung oder Elektronenstrahlung initiiert. Der Initiator wird üblicherweise in einer Menge von 0,1 bis 2 Gew.-%, bezogen auf die Gesamtmenge der Monomere des versteifenden Polymers, verwendet. Geeignete Initiatoren aus der Klasse der Peroxidverbindungen, Azoverbindungen oder Azoperoxidverbindungen sind dem Fachmann bekannt und im Handel erhältlich.

Als Beispiele geeigneter Initiatoren lassen sich Di-tert-butyloxypivalat, Didecanoylperoxid, Dilauroylperoxid, Diacetylperoxid, Di-tert-butylperoctoat, Dibenzoylperoxid, tert-Butylperacetat, tert-Butylperoxyisopropylcarbonat, tert-Butylperbenzoat, Di-tert-butylperoxid, 1,1-Bis-(tert-butylperoxy)-3,3,5-trimethylcyclohexan, 2,5-Dimethyl2,5-bis-(benzoylperoxy)-hexan, 1,4-Di-(tert-butylperoxycarbonyl)-cyclohexan, 1,1-Bis-(tert-butylperoxy)-cyclohexan, Di-tert-butyldiperoxyazelat, oder Di-tert-butylperoxycarbonat anführen. Davon sind Dilauroylperoxid, Dibenzoylperoxid, ter-Butylperbenzoat und tert-Butylperoxyisopropylcarbonat bevorzugt.

Die Polymerisation erfolgt üblicherweise bei erhöhter Temperatur, wobei ein Temperaturbereich von 40 bis 180 °C, vorzugsweise 60 bis 120 °C, geeignet ist. Mit Vorteil kann die Temperatur auch stufenweise erhöht werden. Wird die Polymerisation durch energiereiche Strahlung initiiert, sind auch niedrigere Temperaturen geeignet, z. B. Umgebungstemperatur.

Die Polymerisation erfolgt üblicherweise als Substanzpolymerisation. Lösungsmittel können gegebenenfalls mitverwendet werden. Hierzu sind gesättigte oder ungesättigte aliphatische Kohlenwasserstoffe wie Hexan, Pentan, Isopentan, Cyclohexan, Methylcyclohexan, Diisobuten, Triisobuten, Tetraisobuten, Pentaisobuten, Hexaisobuten oder Gemische davon, aromatische Kohlenwasserstoffe wie Benzol, Toluol, Xylol, oder Gemische davon geeignet. Man kann die Polymerisation auch in Gegenwart eines Weichmachers oder eines Weichmachergemisches durchführen, wie den Phthalaten und Adipaten aliphatischer oder aromatischer Alkohole, z. B. Di-(2-ethylhexyl)adipat, Di-(2-ethylhexyl)phthalat, Diisononyladipat oder Diisonylphthalat.

Führt man die Polymerisation in Gegenwart des zuvor vernetzten Isobutenpolymers durch, kann das kautschukartige Isobutennetzwerk entweder in der gewünschten Gestalt des fertigen Formteils oder in zerkleinerter Form, z. B. als Granulat oder Dispersion vorliegen. Man lässt das kautschukartige Isobutenpolymernetzwerk mit den Monomeren, die das versteifende Polymer der zweiten Phase bilden, ausreichend äquilibrieren bzw. quellen. Zur besseren Quellung kann die Mitverwendung eines der genannten Lösungsmittel vorteilhaft sein. Falls gewünscht, können Hilfsstoffe in diesem Stadium des Herstellungsverfahrens eingearbeitet werden. Nach der Äquilibration bzw. Quellen initiiert man die Polymerisation in geeigneter Weise, z. B. durch Temperaturerhöhung.

Die erfindungsgemäßen Formmassen können daneben übliche Hilfsstoffe enthalten, wie Füllstoffe, Verdünner oder Stabilisatoren.

Geeignete Füllstoffe sind z. B. Kieselsäure, kolloidale Kieselsäure, Calciumcarbonat, Ruß, Titandioxid, Glimmer und dergleichen.

Geeignete Verdünner sind z. B. Polybuten, flüssiges Polybutadien, hydriertes Polybutadien, Paraffinöl, Naphthenate, ataktisches Polypropylen, Dialkylphthalate, Reaktiv-verdünner, z. B. Alkohole und Oligoisobutene.

Geeignete Stabilisatoren sind z. B. 2-Benzothiazolylsulfid, Benzothiazol, Thiazol, Dimethylacetylendicarboxylat, Diethylacetylendicarboxylat, BHT, Butylhydroxyanisol, Vitamin E.

Die Erfindung wird durch die beigefügte Figur und die folgenden Beispiele näher veranschaulicht.

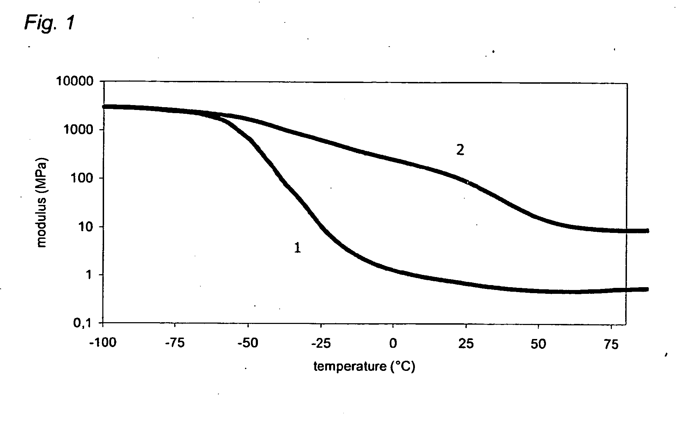

Fig. 1 zeigt die Auftragung des Speichermoduls in MPa in Abhängigkeit von der Temperatur eines Netzwerks aus einem bifunktionellen Hydroxy-terminierten Polyisobuten und einem Polyisocyanat (Kurve 1) und eines Netzwerks aus einem erfindungsgemäßen Polyisobuten mit 1,3-Propandiolendgruppen und dem gleichen Polyisocyanat (Kurve 2).

### Vergleichsbeispiel

1 g α,ω-Dihydroxypolyisobuten (Mn 2100) wurde in 1 ml Toluol gelöst und mit 220 mg Basonat® HI 100 (Polyisocyanat von BASF mit einer Funktionalität von etwa 3,3; Isocyanurat auf der Basis von Hexamethylen-diisocyanat) und 2 mg Dibutylzinndilaurat versetzt und gründlich gemischt. Man goss das Gemisch in eine Schale aus und erwärmte 6 Stunden auf 60 °C. Es wurde ein leicht klebriges transparentes, toluolhaltiges Netzwerk erhalten, das der dynamisch-mechanischen Analyse unterworfen wurde. Der Speichermodul bei 75 °C lag bei 0,7 MPa. Die Auftragung des Speichermoduls in MPa in Abhängigkeit von der Temperatur ist in Figur 1 dargestellt (Kurve 1).

### Beispiel 1: Herstellung von Polyisobuten

In einem 1I-Vierhalskolben, auf den ein Tropftrichter mit Druckausgleich und einem Trockeneiskühler und Trockenrohr aufgesetzt war, legte man 1-Chlorbutan (440 ml) und als Indikator Phenanthrolin (20 mg) vor. Dann kondensierte man Isobuten (560 ml) in den Tropftrichter und entleerte den Inhalt des Tropftrichters in den Kolben. Mit einer Spritze versetzte man das Gemisch mit einer Lösung von Butyllithium in Hexan (1,1 M, etwa 10 ml), bis eine bleibenden Braunfärbung auftrat.

In einem zweiten 11-Vierhalskolben, auf den ein Tropftrichter mit Druckausgleich und einem Trockeneiskühler und Trockenrohr aufgesetzt war und der mit dem ersten Kolben über eine absperrbare Schlauchverbindung verbunden war, legte man 1,3-Dicumylchlorid (43,6 g) vor. Man erwärmte den Inhalt des ersten Kolbens unter leichzeitiger Kühlung des zweiten Kolbens, so dass der Inhalt des ersten Kolbens in den zweiten Kolben überdestilliert.

Unter Rühren setzt man im zweiten Kolben Phenyltriethoxysilan (1,44 g) über eine Spritze zu und kühlte mit Aceton/Trockeneis auf -76 °C. Dann setzte man TiCl₄ (2,0 ml) über eine Spritze zu und nach einer Reaktionszeit von 30 Minuten Acetonitril (2 g). Man filtrierte den entstandenen braunen Niederschlag ab, schwenkte das Filtrat 10 min über Aluminiumoxid (Kugeln mit 2-3 mm Durchmesser; 100 g). Man zog das Lösungsmittel bei Raumtemperatur im Vakuum ab.

Das Molekulargewicht Mn des erhaltenen Polymers betrug 2227 (GPC-Bestimmung), die Dispersität 1,40. Der durchschnittliche Gehalt an Chloratomen pro Polyisobutenmolekül betrug 1,9 (Bestimmung mit ¹H-NMR).

100 g des so erhaltenen Polymers wurden in 100 ml Tetrahydrofuran gelöst und mit 10 g Kalium-tert-butylat unter Rückfluss zum Sieden erhitzt. Dann versetzte man mit je 200 ml Heptan, Isopropanol und Wasser, mischte und trennte nach 10 min die wässrige Phase ab. Man wusch die organische Phase zweimal mit 200 ml gesättigter Kochsalzlösung, trocknete über Natriumsulfat und engte zur Trockene ein.

Im ¹H-NMR stellte man 98 % Olefingruppen fest (olefinische Protonen bei 4,6 und 4,8 ppm).

### Beispiel 2: Epoxidierung

200 g Polyisobuten aus Beispiel 1, 200 ml Toluol, 20 g Ameisensäure, 62 g Essigsäure und 50 g Wasserstoffperoxid (wässrige Lösung 50 Gew.-%) wurden in einem 1l-Vierhalskolben mit Heizbad, Rührer und Wasserabscheider unter starkem Rühren bei 330 mbar auf 60 °C erwärmt. Es setzte eine exotherme Reaktion ein, die am beginnenden Rückfluss erkennbar war. Nach 30 Minuten wurde die Badtemperatur auf 80°C erhöht. Man kreiste etwa 25 ml Wasser aus und rührte 1 Stunde nach. Man kühlte das Reaktionsgemisch mit Eis und ließ die wässrige Phase absetzen. Nach 5 min trennte man die wässrige Phase ab (75 ml), versetzte die organische Phase mit 60 ml Wasser und rührte 5 min. Nach 5 min stellte man den Rührer ab und entfernte nach weiteren 5 min 68 ml wässrige Phase. Der Waschvorgang wurde wiederholt, danach hatte die organische Phase eine Säurezahl von 2 und enthielt noch etwa 10 ppm Peroxid, das durch Zusatz von 30 g gesättigter FeCl₂-Lösung zerstört wurde. Man trennte die organische Phase ab, trocknete über Natriumsulfat und engte eine Probe bei Raumtemperautur im Vakuum (2 mbar) zur Trockne ein.

Das ¹H-NMR zeigte etwa 1,6 % Olefingruppen (4,6-5,2 ppm) und 98 % Epoxygruppen, davon 97% 1,2 Epoxid (2,55-2,59 ppm), und 1 % 2,3-Epoxid (2,53-2,55 ppm) bezogen auf das aromatische Proton bei 7,4 ppm.

### Beispiel 3: Herstellung eines Polyols

Man verwendete das Epoxid aus Beispiel 2 und arbeitete nach der Vorschrift der EP-A 737 662, Beispiel 1.

Man erhielt eine OH-Funktionalität von 3,5, bezogen auf das aromatische Proton bei 7,4 ppm.

### Beispiel 4

1 g Polyisobutenpolyol aus Beispiel 3 wurde in 1 ml Toluol gelöst und mit 300 mg Basonat HI 100 30 min gerührt, danach mit 3 mg Dibutylzinndilaurat versetzt, in eine Schale ausgegossen und 6 Stunden auf 100 °C erwärmt. Es wurde ein leicht klebriges transparentes Netzwerk erhalten, das der dynamisch-mechanischen Analyse unterworfen wurde. Der Speichermodul bei 75 °C lag bei 8 MPa. Die Auftragung des Speichermoduls in MPa in Abhängigkeit von der Temperatur ist in Figur 1 dargestellt (Kurve 2).

## Patentansprüche

1. Isobutenpolymer, umfassend durchschnittlich wenigstens 1,4 terminale 1,3-Propandiolgruppen.

2. Isobutenpolymer nach Anspruch 1, umfassend durchschnittlich wenigstens 1,7 terminale 1,3-Propandiolgruppen.

3. Isobutenpolymer nach Anspruch 1 oder 2, mit einem zahlenmittleren Molekulargewicht von 500 bis 50000.

4. Formmasse, umfassend das Umsetzungsprodukt eines lsobutenpolymers, das durchschnittlich wenigstens 1,4 terminale 1,3-Propandiolguppen umfasst, mit einem Vernetzungsmittel, das wenigstens 2 gegenüber Hydroxylgruppen reaktive funktionelle Gruppen pro Molekül des Vernetzungsmittels umfasst.

5. Formmasse nach Anspruch 4, wobei die gegenüber Hydroxylgruppen reaktiven funktionellen Gruppen unter Epoxy- und Isocyanatgruppen ausgewählt sind.

6. Formmasse nach Anspruch 5, wobei das Vernetzungsmittel ein di- oder höherfunktionelles Isocyanat ist.

7. Formmasse nach einem der Ansprüche 4 bis 6, wobei das Isobutenpolymer wenigstens 1,8 terminale 1,3-Propandiolgruppen umfasst.

8. Formmasse nach einem der Ansprüche 4 bis 7, wobei das Isobutenpolymer vor der Umsetzung mit dem Vernetzungsmittel ein zahlenmittleres Molekulargewicht von 500 bis 5000 aufweist.

9. Formmasse nach einem der Ansprüche 4 bis 8, außerdem umfassend ein versteifendes Polymer, das (Meth)acryl- und/oder Vinylaromateneinheiten umfasst.

## Claims

1. An isobutene polymer comprising an average of at least 1.4 terminal 1,3-propanediol groups.

2. An isobutene polymer according to claim 1, comprising an average of at least 1.7 terminal 1,3-propanediol groups.

3. An isobutene polymer according to claim 1 or 2, with a number-average molecular weight of 500 to 50 000.

4. A molding material comprising the reaction product of an isobutene polymer which comprises an average of 1.4 terminal 1,3-propanediol groups with a crosslinker which comprises at least two functional groups reactive toward hydroxyl groups per molecule of the crosslinker.

5. The molding material according to claim 4, wherein the functional groups reactive toward hydroxyl groups are selected from epoxy and isocyanate groups.

6. The molding material according to claim 5, wherein the crosslinker is a difunctional or higher-functionality isocyanate.

7. The molding material according to any of claims 4 to 6, wherein the isobutene polymer comprises at least 1.8 terminal 1,3-propanediol groups.

8. The molding material according to any of claims 4 to 7, wherein the isobutene polymer prior to the reaction with the crosslinker has a number-average molecular weight of 500 to 5000.

9. The molding material according to any of claims 4 to 8, also comprising a reinforcing polymer which comprises (meth)acryloyl and/or vinylaromatic units.

## Revendications

1. Polymère d'isobutène, comprenant en moyenne au moins 1,4 groupe 1,3-propanediol terminal.

2. Polymère d'isobutène selon la revendication 1, comprenant en moyenne au moins 1,7 groupe 1,3-propanediol terminal.

3. Polymère d'isobutène selon la revendication 1 ou 2, présentant un poids moléculaire numérique moyen de 500 à 50 000.

4. Masse de moulage, comprenant le produit de transformation d'un polymère d'isobutène qui contient en moyenne au moins 1,4 groupe 1,3-propanediol terminal, avec un réticulant qui comprend au moins deux groupes fonctionnels réactifs avec des groupes hydroxyle par molécule de réticulant.

5. Masse de moulage selon la revendication 4, où les groupes fonctionnels réactifs avec des groupes hydroxyle sont choisis parmi les groupes époxy et isocyanate.

6. Masse de moulage selon la revendication 5, où le réticulant est un isocyanate difonctionnel ou de fonctionnalité supérieure.

7. Masse de moulage selon l'une quelconque des revendications 4 à 6, où le polymère d'isobutène comprend au moins 1,8 groupe 1,3-propanediol terminal.

8. Masse de moulage selon l'une quelconque des revendications 4 à 7, où le polymère d'isobutène présente, avant la transformation avec le réticulant, un poids moléculaire numérique moyen de 500 à 5000.

9. Masse de moulage selon l'une quelconque des revendications 4 à 8, comprenant en outre un polymère rigidifiant, qui comprend des unités (méth)acryle et/ou aromatiques de vinyle.
